# FASCICULE DE BREVET EUROPEEN

(11) **EP 0 686 792 B1**
(45) Date de publication et mention de la délivrance du brevet: **22.08.2001**
(21) Numéro de dépôt: 95401327.2
(22) Date de dépôt: 08.06.1995
(51) Int. Cl.: F16J 15/08, F16K 1/42

(54) **Système à joint d'étanchéité comprimé entre deux portées non parallèles**
Abdichtung zwischen zwei nichtparallelen Oberflächen
Sealing between two non-parallel surfaces

(30) Priorité: 10.06.1994 FR 9407143
(43) Date de publication de la demande: 13.12.1995
(73) Titulaire: COMMISSARIAT A L'ENERGIE ATOMIQUE, 75015 Paris Cédex 15 (FR)
(72) Inventeur: De Villepoix, Raymond, F-26290 Donzere (FR); Rouaud, Christian, F-07700 Bourg Saint-Andeol (FR)
(74) Mandataire: Ilgart, Jean-Christophe

(56) Documents cités:
- WO-A-84/00058
- FR-A- 2 253 170
- GB-A- 1 325 997
- US-A- 1 427 680

## Description

L'invention concerne un système d'étanchéité comprenant en particulier un joint comprimé entre deux portées non parallèles. Elle se distingue cependant d'appareils où un joint est posé sur une portée sensiblement plane et dilaté radialement par une portée fortement conique d'un clapet qui pénètre dans l'ouverture du joint ; de tels appareils sont décrits dans US-A-1 427 680, 5 178 364 et 5 249 774. Les portées y font typiquement des angles de 60° ou plus.

Il existe à ce jour un assez grand nombre d'appareils qui permettent de rétablir périodiquement l'étanchéité entre deux milieux par la répétition d'un mouvement relatif de deux pièces mécaniques qui serrent entre elles un joint d'étanchéité, et notamment les vannes, les robinets, les soupapes et les portes de visite à ouverture et fermeture périodique. Dans certains de ces appareils, le joint est métallique et élastique, et il est comprimé entre des portées faites d'un métal identique ou différent. Certains critères tels que la tenue au feu, une température élevée de service et la nécessité d'obtenir un vide poussé peuvent en effet imposer l'exclusion d'autres matières.

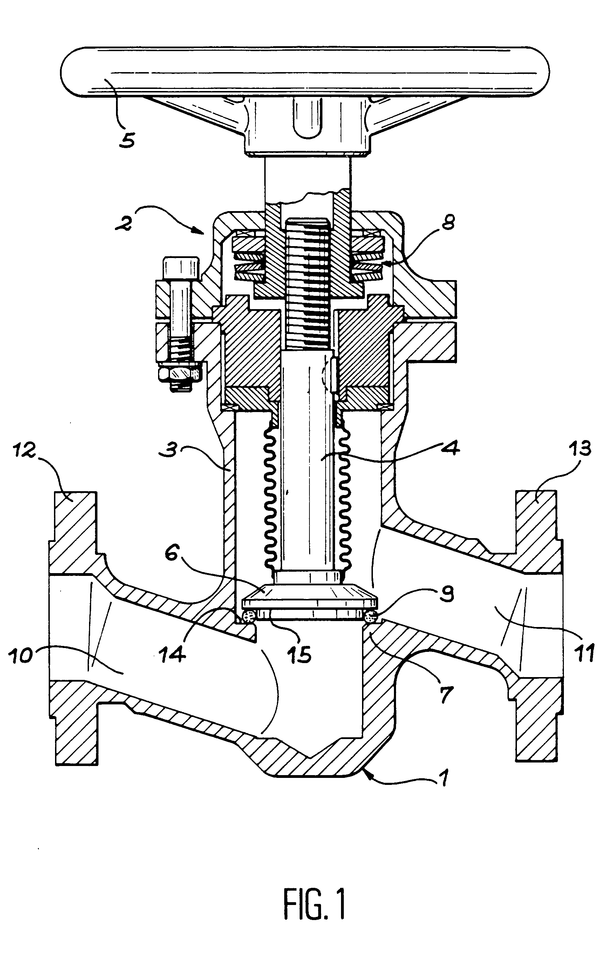

Un système classique de robinet est décrit à l'aide de la figure 1. On trouve un corps 1 de robinet, associé à un organe de commande 2 engagé dans un manchon 3 du corps 1 et qui comprend en particulier une tige de manoeuvre 4 commandée par un volant 5 extérieur. La tige de manoeuvre 4 est terminée à l'autre extrémité par un clapet 6 tourné vers un siège 7 et équipé d'un joint 9 d'étanchéité appelé aussi joint de clapet.

Le siège 7, qui appartient au corps 1, est situé à l'intérieur de celui-ci à la jonction de deux segments de conduits 10 et 11 qui aboutissent chacun à des brides 12 et 13 aux extrémités du corps 1, auxquelles on peut raccorder des tuyauteries.

Un moyen mécanique tel qu'une liaison vis-écrou entre la tige de manoeuvre 4 et le volant 5 et une clavette entre la tige de manoeuvre 4 et le corps 1 permet de convertir la rotation du volant 5 en un mouvement axial de la tige de manoeuvre 4 et du clapet 6, qui peut avancer vers le siège 7 jusqu'à ce que le joint 9 soit comprimé entre une portée 14 du siège 7 et une portée 15 du clapet 6. La communication entre les milieux formés par les segments de conduits 10 et 11 est alors interrompue, mais elle peut être rétablie par un mouvement inverse du clapet 6. Enfin, des rondelles élastiques 8 empilées, disposées entre le corps 1 et un épaulement du volant 5, repoussent celui-ci vers le siège 7 et le maintiennent en général à une position uniforme.

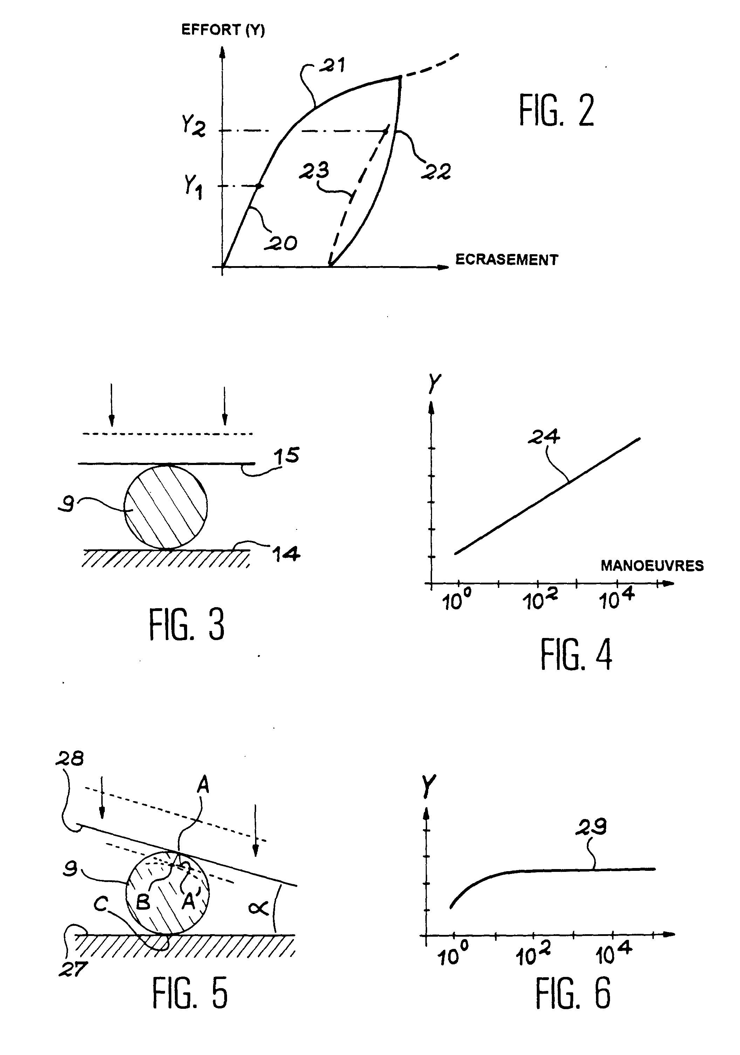

Parmi les joints existants qui peuvent être comprimés entre deux pièces métalliques on retiendra, à titre d'exemple non limitatif, les joints d'étanchéité métalliques, élastiques et flexibles de forme torique comprenant une âme métallique constitué d'un ressort hélicoïdal à spires jointives, refermé en cercle sur lui-même, et au moins une enveloppe métallique extérieure dans laquelle est encastrée l'âme métallique, et qui présente en section une forme de C ou d'anneau ouvert. Quand un tel joint est comprimé entre deux brides ou deux portées, on peut l'identifier par sa courbe caractéristique d'effort en fonction de l'écrasement, dont la figure 2 donne un exemple. La compression commence par une partie de courbe 20 parfaitement rectiligne, c'est-à-dire que l'écrasement est proportionnel à l'effort, et continue par une partie traduisant une moindre résistance du joint, c'est-à-dire qu'un surcroît d'effort plus faible produit un écrasement plus important. La compression du joint 9 s'arrête en pratique en fonction de la résistance fournie par les rondelles élastiques 8 dans le système de la tige de manoeuvre 4 et du volant 5 : elles se déforment à leur tour et s'écrasent en subissant une force déterminée. La courbe de décompression 22 du joint 9 est produite avec une hystérésis laissant subsister un écrasement résiduel non négligeable après l'enlèvement du joint 9 de la portée du siège 14. La compression suivante du joint 9 s'effectuera selon une courbe 23 plus ou moins parallèle à la première courbe de compression 20 et 21, mais on remarque que l'effort Y2 nécessaire pour rétablir l'étanchéité est plus important que l'effort Y1 qui suffisait à la première fois. On peut constater qu'il en irait de même pour chaque utilisation ultérieure, ce qui implique qu'un joint métallique torique tel que défini plus haut ne peut pas être utilisé longtemps pour renouveler l'étanchéité entre les deux portées 14 et 15 car l'effort nécessaire pour rétablir l'étanchéité excéderait l'effort qu'il est possible d'appliquer au bout de peu de manoeuvres.

On constate que l'évolution de l'effort de création d'étanchéité Y suit une progression linéaire 24 rapportée au logarithme du nombre de manoeuvres du clapet 6 (figure 4) pour le joint 9 serré entre les deux portées parallèles 14 et 15 (figure 3).

Comme échappatoire à cette augmentation persistante du seuil d'effort d'étanchéité à chaque nouvelle utilisation, on propose conformément à la présente invention de changer la disposition respective des portées du siège 7 et du clapet 6 de la manière indiquée par les caractéristiques de la revendication 1. Plus précisément, on les fera notamment former un angle aigu de 45° au plus entre elles.

L'invention va être décrite plus en détail dans son principe et certaines de ses réalisations à l'aide des figures suivantes annexées à titre illustratif et non limitatif :
- les figures 1 et 2 déjà décrites illustrent un système d'étanchéité et la courbe caractéristique d'écrasement d'un joint,
- la figure 3 déjà décrite représente les éléments fondamentaux des systèmes d'étanchéité classiques,
- la figure 4 déjà décrite illustre la dégradation de l'aptitude des systèmes d'étanchéité classiques à remplir leur mission,
- la figure 5 représente, en correspondance à la figure 3, les éléments fondamentaux des systèmes d'étanchéité conformes à l'invention,
- la figure 6 illustre, en correspondance à la figure 4, la conservation de l'aptitude des systèmes d'étanchéité conformes à l'invention à remplir leur mission,
- et les figures 7 à 14 illustrent huit réalisations de l'invention.

Considérons maintenant (figure 5) le même joint 9 comprimé entre une face plane 27 fixe et une face conique 28 mobile qui ont entre elles un angle aigu α. Cette particularité permet d'éviter un phénomène de martelage du joint 9 à chaque nouvelle compression accompagné d'un écrasement plastique local aplanissant les facettes martelées et élargissant sans cesse la zone de contact du joint avec les portées d'étanchéité par suite des ouvertures et fermetures du clapet 6. En effet, le point A de contact initial de la portée conique 28 avec la section représentée du joint 9 n'est pas diamétralement opposé au point de contact C avec la face plane 27 et va se déplacer en A', parallèlement à la direction de déplacement de la portée conique 28, pendant son déplacement d'une hauteur AA', avec comme corollaire un écrasement de la partie adjacente du joint 9 qui aura pour conséquence que le point A de contact initial se déplacera vers le point B un peu à côté du nouveau point de contact A'. Il en résulte que le joint 9 et la portée conique 28 glisseront l'un sur l'autre d'une longueur BA' égale à AB.tgα, ou AA'.sinα, et donc parfaitement déterminée.

Ce glissement produit des modifications à l'échelle microgéométrique de la surface du joint 9 qu'on peut comparer à un lustrage qui est entretenu avec la répétition des serrages et des desserrages. On constate dans ces conditions que, conformément à la courbe 29 de la figure 6, l'effort nécessaire pour l'établissement de l'étanchéité se stabilise entre dix et cent manoeuvres. On doit préciser que la rugosité de la face conique 28 d'étanchéité doit être apte à favoriser ce phénomène de lustrage, c'est-à-dire qu'elle ne doit être ni trop fine ni grossière. Elle peut se situer autour de 0,5 à 1 µm de hauteur des accidents de relief.. Le joint 9 doit également être suffisamment lisse et présenter un état de surface exempt de défauts tels que ceux qui apparaissent souvent sur les tôles laminées servant à la fabrication des joints à enveloppes minces. Ce résultat peut être obtenu facilement par des procédés de fabrication assez courants tels que le fluotournage ou le galetage circulaire pratiqué en fin de fabrication, ou encore par un traitement de surface tel qu'un dépôt électrochimique au plasma ou un dépôt physique en phase de vapeur. Ce comportement global est valable quelle que soit la nature du métal formant la peau externe du joint métallique, et en particulier l'aluminium, l'argent, le cuivre, le nickel ou l'acier inoxydable. Il suffira, pour favoriser et entretenir le lustrage, de choisir correctement l'effort de serrage du joint, qui doit rester constant, et surtout l'angle α pour tenir compte de l'écrasement du joint 9 à chaque manoeuvre, qui dépend directement de la ductilité de ce métal.

Pour les métaux moins ductiles, la valeur AB est plus faible à effort constant, ce qui oblige à augmenter l'angle α pour rétablir la longueur de glissement BA'.

Le tableau I donne des résultats expérimentaux effectués sur mille manoeuvres pour des niveaux d'étanchéité mesurés à l'hélium de l'ordre de 10⁻¹⁰ à 10⁻⁸ Pa.m³/s/m.

**TABLEAU I**

| Nature du revêtement du joint | EFFORT CONSTANT Y (daN/cm de longueur du joint) | α |
|---|---|---|
| Aluminium | 80 à 120 | 10 à 15° |
| Argent | 80 à 120 | 20 à 30° |
| Cuivre | 90 à 130 | 25 à 35° |
| Nickel | 100 à 140 | 30 à 40° |
| Inox | 120 à 150 | 35 à 45° |

Cet effet de lustrage n'est pas produit avec la portée plane 27 de compression du joint 9. On peut certes disposer le joint 9 entre deux portées coniques pour assurer une étanchéité parfaite par le joint 9 seul, mais on n'a pas toujours une pleine liberté pour choisir la forme des portées, et le montage du joint 9 sur une portée plane telle que 27 est plus stable. On est alors amené à compléter l'action du joint 9 par un joint statique, qui peut être partiellement formé par un allongement de l'enveloppe extérieure du joint torique sous forme de languette plane. Le joint principal ou joint de glissement sera donc comprimé entre les portées de serrage du siège et du clapet et assurera l'étanchéité contre la portée conique alors que le joint d'étanchéité sera comprimé entre la portée plane et une pièce de serrage reliée à l'élément porteur de la portée plane, et assurera l'étanchéité contre la portée plane.

C'est cette situation, avantageuse car elle réalise une association étroite entre les deux joints, qui est représentée sur les autres figures dont la description va maintenant être entreprise.

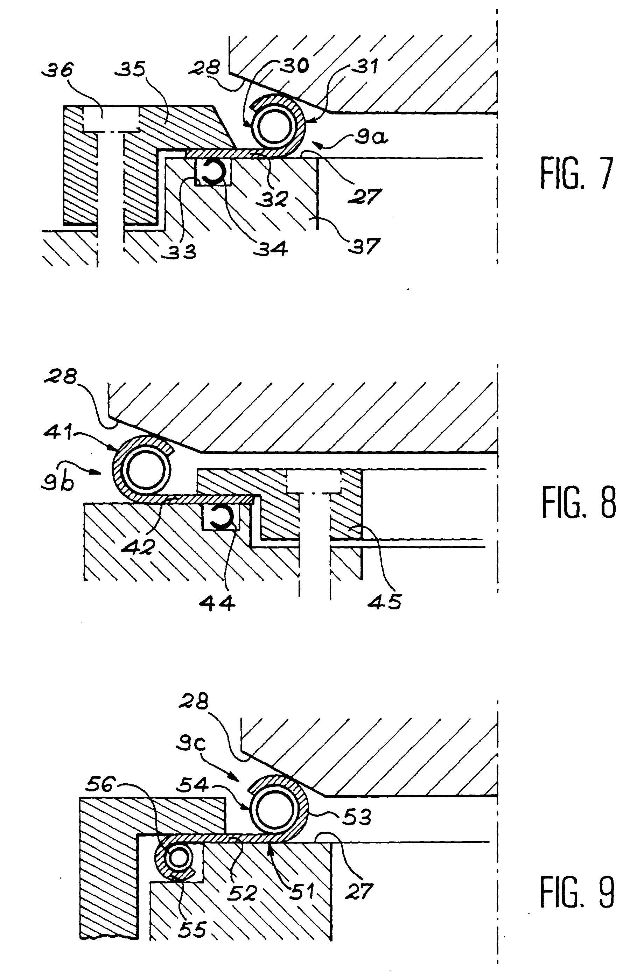

C'est ainsi que la figure 7 représente un joint 9a comprimé entre les portées 27 et 28, et qui se compose, comme on l'a dit, d'une âme 30 interne formée de spires d'un ressort et d'une enveloppe 31 ouverte vers l'extérieur, qui contourne l'âme 30 par le dessus (du côté de la portée conique 28), par la face interne et par le dessous (du côté de la portée plane 27), et qui se prolonge vers l'extérieur en une languette plane 32 recouvrant une gorge 33 établie sur la portée plane 27 et qui reçoit un second joint 34, métallique ou non du même type ou différent.

Une bride 35, assujettie par des vis 36 au siège 37, presse la languette 32 contre la portée plane 27 (qui appartient au siège 37) et comprime le second joint 34 dans sa gorge 33 par l'intermédiaire de la languette 32. Le second joint 34 assure l'étanchéité du système entre la languette 32 et la portée plane 27.

La figure 8 représente une vue d'une réalisation presque semblable à l'exception que le joint 9b principal possède une enveloppe 41 s'ouvrant vers l'intérieur et dont la languette 42 s'étend également vers l'intérieur de l'espace entouré par le joint 9b, de même que la bride 45 de serrage du second joint 44 que le joint 9b entoure. Tous les autres commentaires de la figure 7 s'appliquent à celle-ci. En particulier, le joint 9b principal assure l'étanchéité contre la portée conique 28, et le second joint 44 assure l'étanchéité contre la portée plane 27.

D'autres conceptions utilisent un joint unique pour assurer l'étanchéité sur les deux portées 27 et 28. C'est ainsi que le joint 9c de la figure 9 comprend une enveloppe 51 composée d'une languette 52 enroulée à ses deux extrémités opposées : une des extrémités 53 entoure une âme 54 comprimée entre les portées 27 et 28, et l'autre extrémité 55 porte une âme 56 comprimée au fond d'une gorge par une bride, comme pour la figure 7. Les âmes 54 et 56 correspondent donc à celles du joint principal 9a ou 9b et, respectivement, au second joint 34 ou 44.

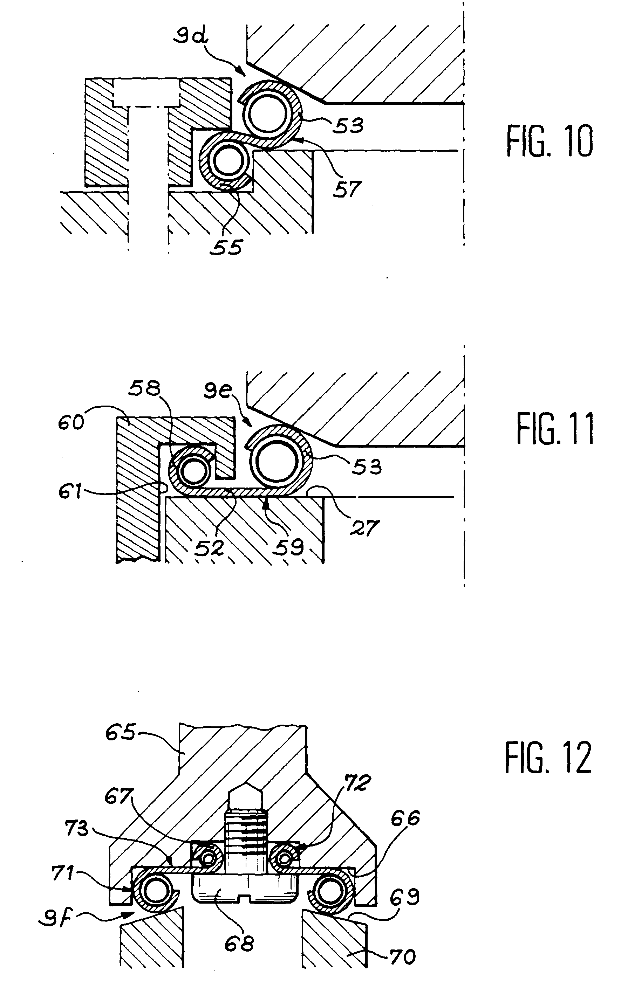

Une conception presque semblable est représentée à la figure 10, où le joint 9d possède une enveloppe 57 sans la languette 52, c'est-à-dire dont les extrémités recourbées 53 et 55 sont jointives ou presque.

La figure 11 décrit un joint 9e qui ressemble au joint 9c également, avec cette différence que les extrémités 53 et, ici, 58 de l'enveloppe 59 comportant également la languette 52 sont recourbées dans le même sens, ce qui exempte de creuser une gorge dans la portée plane 27. La bride de serrage, ici référencée par 60, porte elle-même une gorge 61 pour recevoir la partie du joint 9e comprenant l'extrémité 58 et qui assure l'étanchéité contre la portée plane 27.

Dans toutes les conceptions précédentes, le siège du système possède la portée plane 27 et le joint repose sur cette portée. Or les rôles du siège et du clapet peuvent être intervertis. On a représenté une telle conception sur la figure 12, où un joint 9f de forme analogue au joint 9c est disposé sur un clapet 65, dans un évidement 66 muni d'un renfoncement central 67. Le fond de l'évidement 66 forme une portée plane pour le joint 9f, et la portée conique 69 se trouve sur le siège 70. Une portion 71 du joint 9f (composée comme ailleurs d'un ressort à spires jointives entouré d'une enveloppe métallique) est comprimée entre la portée conique 69 et le fond de l'évidement 66, une portion opposée 72 (composée comme la précédente) est comprimée dans le renfoncement central 67 par une vis de pression 68 et une portion intermédiaire 73, composée d'une portion en languette plane de l'enveloppe métallique, repose dans l'évidement 66. Les portions 71 et 72 assurent donc l'étanchéité contre la portée conique 69 et la surface du renfoncement central 67, entre lesquelles elles s'étendent respectivement

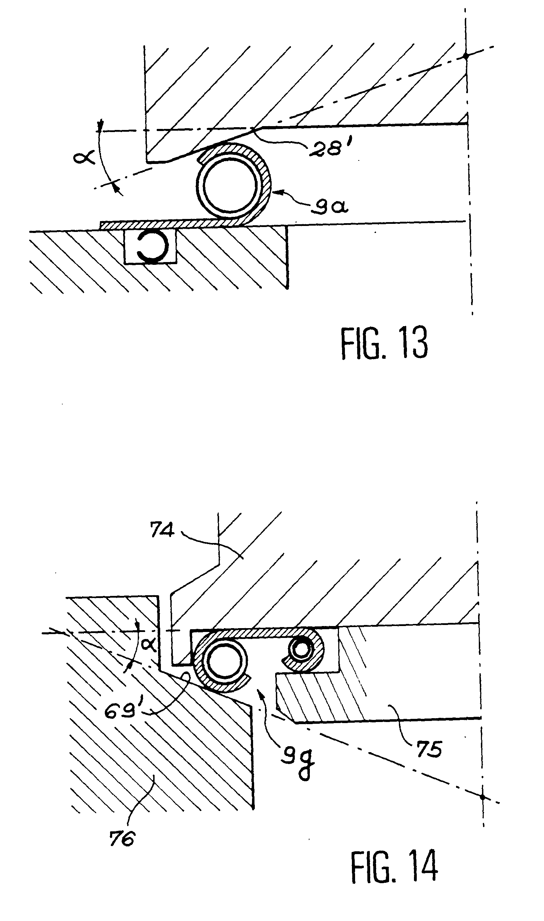

Il est encore possible que l'angle α ne soit pas orienté pour s'ouvrir vers l'extérieur du joint 9 comme dans les figures précédentes, mais vers l'intérieur. On représente cette conception à la figure 13, où la portée conique 28' est donc orientée vers l'intérieur du joint 9a au lieu d'être vers l'extérieur de lui. Cette conception est identique à celle de la figure 7 dans tous ses autres aspects, et elle fonctionne de la même façon. Enfin, la conception de la figure 14 combine quelque peu les précédentes en ce qu'elle comprend un joint 9g semblable par sa forme au joint 9e, mais qui est disposé différemment, sur un clapet 74, c'est-à-dire que le joint statique est entouré par le joint à glissement et serré par une vis 75 fixée au clapet 74, et le siège 76 a une portée conique 69' orientée vers l'intérieur du joint 9g.

On voit facilement de cet exemple qu'on peut concevoir encore d'autres modes de combinaison des éléments des figures qui précèdent.

## Revendications

1. Système composé d'un siège (7, 37, 70, 76), d'un clapet (6, 65, 74) et d'un joint circulaire (9, 9a à 9g) disposé et comprimé entre des portées (27, 28) du siège et du clapet pour y réaliser une étanchéité, le joint étant torique, élastique et entouré par une enveloppe extérieure métallique, caractérisé en ce que l'enveloppe est réalisé dans l'un des métaux suivants: aluminium, argent, cuivre, nickel, inox, et en ce que les portées font un angle aigu (α) de 45° au plus entre elles, de manière à ce que les points (A,C) de contact initial du joint avec les portées du siège et du clapet ne soient pas diamétralement opposés.

2. Système d'étanchéité selon la revendication 1, où la valeur de l'angle aigu est directement liée à la nature du joint d'étanchéité et à la valeur de l'effort de serrage du joint de clapet.

3. Système selon la revendication 1 ou 2, caractérisé en ce que le joint comprend une enveloppe ouverte (31, 41, 53) se prolongeant en une languette (32, 42, 52, 73) reposant sur une des portées (27).

4. Système selon la revendication 3, caractérisé en ce que la languette (32) recouvre une gorge (33) creusée dans la portée (27) sur laquelle elle repose et contenant un joint statique d'étanchéité (34), une bride (35) comprimant la languette sur le joint statique.

5. Système selon la revendication 4, caractérisé en ce que le joint statique (55) comprend une enveloppe prolongeant la languette (52).

6. Système selon la revendication 3, caractérisé en ce que la languette (52) est prolongée par une enveloppe ouverte (58) d'un joint statique d'étanchéité comprimé sur la portée (27) sur laquelle repose la languette (52) par une bride (60).

7. Système selon l'une quelconque des revendications 3 à 6, caractérisé en ce que la portée (27) sur laquelle la languette repose est plane.

8. Système selon l'une quelconque des revendications 1 à 7, caractérisé en ce que l'angle aigu (α) s'ouvre vers l'extérieur du joint.

9. Système selon l'une des revendications 1 à 7, caractérisé en ce que l'angle aigu s'ouvre vers l'intérieur du joint (figures 13 et 14).

10. Système selon l'une quelconque des revendications 1 à 9, caractérisé en ce que l'enveloppe est formée extérieurement d'aluminium et en ce que l'angle des portées est compris entre 10° et 15°.

11. Système selon l'une quelconque des revendications 1 à 9, caractérisé en ce que l'enveloppe est formée extérieurement d'argent et en ce que l'angle des portées est compris entre 20° et 30°.

12. Système selon l'une quelconque des revendications 1 à 9, caractérisé en ce que l'enveloppe est formée extérieurement de cuivre et en ce que l'angle des portées est compris entre 25° et 35°.

13. Système selon l'une quelconque des revendications 1 à 9, caractérisé en ce que l'enveloppe est formée extérieurement de nickel et en ce que l'angle des portées est compris entre 30° et 40°.

14. Système selon l'une quelconque des revendications 1 à 9, caractérisé en ce que l'enveloppe est formée extérieurement d'acier inoxydable et en ce que l'angle des portées est compris entre 35° et 45°.

## Patentansprüche

1. Zusammengesetztes System aus einem Sitz (7, 37, 70, 76), einem Ventil (6, 65, 74) und einer kreisrunden Dichtung (9, 9a bis 9g), angeordnet und zusammengepresst zwischen Auflageflächen (27, 28) des Sitzes und des Ventils, um dort Dichtheit herzustellen, wobei die Dichtung ringförmig, elastisch und von einer metallischen Außenhülle umgeben ist,
**dadurch gekennzeichnet,**
dass die Hülle aus einem der Metalle Aluminium, Silber, Kupfer, Nickel oder Inox hergestellt ist, und dadurch, dass die Auflageflächen miteinander einen spitzen Winkel (α) von höchstens 45° bilden, so dass die Punkte (A, C) des Anfangskontakts der Dichtung mit den Auflageflächen des Sitzes und des Ventils sich nicht diametral gegenüberstehen.

2. Abdichtungssystem nach Anspruch 1, wobei der Wert des spitzen Winkels direkt mit der Art der Dichtung und mit dem Wert der Klemm- bzw. Presskraft der Ventildichtung verbunden ist.

3. System nach Anspruch 1 oder 2, dadurch gekennzeichnet, dass die Dichtung eine offene Hülle (31, 41, 53) umfasst, die sich in einer auf einer der Auflageflächen (27) ruhenden Zunge (32, 42, 52, 73) fortsetzt.

4. System nach Anspruch 3, dadurch gekennzeichnet, dass die Zunge (32) eine Nut (33) überdeckt, die eingearbeitet ist in die Auflagefläche (27), auf der sie ruht, und in der ein statischer Abdichtungsring (34) sitzt, wobei ein Flansch (35) die Zunge auf den statischen Abdichtungsring drückt.

5. System nach Anspruch 4, dadurch gekennzeichnet, dass der statische Abdichtungsring (55) eine die Zunge (52) verlängernde Hülle umfasst.

6. System nach Anspruch 3, dadurch gekennzeichnet, dass die Zunge (52) verlängert wird durch eine offene Hülle (58) eines statischen Abdichtungsrings, der durch einen Flansch (60) gegen die Auflagefläche (27) gepresst wird, auf der die Zunge (52) ruht.

7. System nach einem der Ansprüche 3 bis 6, dadurch gekennzeichnet, dass die Auflagefläche (27), auf der die Zunge ruht, eben ist.

8. System nach einem der Ansprüche 1 bis 7, dadurch gekennzeichnet, dass sich der spitze Winkel (α) zur Außenseite der Dichtung hin öffnet.

9. System nach einem der Ansprüche 1 bis 7, dadurch gekennzeichnet, dass sich der spitze Winkel (α) zur Innenseite der Dichtung hin öffnet.

10. System nach einem der Ansprüche 1 bis 9, dadurch gekennzeichnet, dass die Hülle außen aus Aluminium ist und dass der Winkel der Auflageflächen zwischen 10° und 15° enthalten ist.

11. System nach einem der Ansprüche 1 bis 9, dadurch gekennzeichnet, dass die Hülle außen aus Silber ist und dass der Winkel der Auflageflächen zwischen 20° und 30° enthalten ist.

12. System nach einem der Ansprüche 1 bis 9, dadurch gekennzeichnet, dass die Hülle außen aus Kupfer ist und dass der Winkel der Auflageflächen zwischen 25° und 35° enthalten ist.

13. System nach einem der Ansprüche 1 bis 9, dadurch gekennzeichnet, dass die Hülle außen aus Nickel ist und dass der Winkel der Auflageflächen zwischen 30° und 40° enthalten ist.

14. System nach einem der Ansprüche 1 bis 9, dadurch gekennzeichnet, dass die Hülle außen aus nichtoxidierbarem Stahl ist und dass der Winkel der Auflageflächen zwischen 35° und 45° enthalten ist.

## Claims

1. System formed by a seat (7, 37, 70, 76), a clack valve (6, 65, 64) and a circular joint (9, 9a to 9g) positioned and compressed between bearing surfaces (27, 28) of the seat and the clack valve in order to form there a seal, the joint being toric, elastic and surrounded by an outer, metal envelope, characterized in that the envelope is made from one of the following metals: aluminium, silver, copper, nickel, stainless steel and in that the bearing surfaces form an acute angle (α) between them of at the most 45°, so that the initial contact points (A, C) with the bearing surfaces of the seat and the clack valve are not diametrically opposite.

2. Sealing system according to claim 1, where the value of the acute angle is directly linked with the nature of the gasket and the value of the clamping force of the clack valve.

3. System according to claim 1 or 2, characterized in that the joint includes an open casing (31, 41, 53) extending into a tongue (32, 42, 52, 73) resting on one of the bearing surfaces (27).

4. System according to claim 3, characterized in that the tongue (32) covers a throat (33) hollowed in the bearing surface (27) on which it rests and containing a static sealing joint (34), a flange (35) compressing the tongue on the static joint.

5. System according to claim 4, characterized in that the static joint (55) includes a casing extending the tongue (52).

6. System according to claim 3, characterized in that the tongue (52) is extended by an open casing (58) of a static sealing joint compressed on the bearing surface (27) on which the tongue (52) rests via a flange (60).

7. System according to any one of the claims 3 to 6, characterized in that the bearing surface (27) on which the tongue rests is flat.

8. System according to any one of the claims 1 to 7, characterized in that the acute angle (α) opens towards the outside of the joint.

9. System according to any one of the claims 1 to 7, characterized in that the acute angle opens towards the inside of the joint (figs. 13 and 14).

10. System according to any one of the claims 1 to 9, characterized in that the envelope is formed externally of aluminium and in that the angle of the bearing surfaces is between 10 and 15°.

11. System according to any one of the claims 1 to 9, characterized in that the envelope is formed externally of silver and in that the angle of the bearing surfaces is between 20 and 30°.

12. System according to any one of the claims 1 to 9, characterized in that the envelope is formed externally of copper and in that the angle of the bearing surfaces is between 25 and 35°.

13. System according to any one of the claims 1 to 9, characterized in that the envelope is formed externally of nickel and in that the angle of the bearing surfaces is between 30 and 40°.

14. System according to any one of the claims 1 to 9, characterized in that the envelope is formed externally of stainless steel and in that the angle of the bearing surfaces is between 35 and 45°.
